**Europäisches Patentamt**

(19) **European Patent Office**

**Office européen des brevets**

(11) Publication number: **0 068 006**
**B1**

(12) **EUROPEAN PATENT SPECIFICATION**

(45) Date of publication of patent specification: **18.06.86**　(51) Int. Cl.⁴: **B 01 D 53/34**

(21) Application number: **82900186.6**

(22) Date of filing: **22.12.81**

(86) International application number:
**PCT/DK81/00118**

(87) International publication number:
**WO 82/02151 08.07.82 Gazette 82/17**

(54) A PROCESS FOR CLEANING FLUE GASES FROM HEATING PLANTS.

(30) Priority: **23.12.80 DK 5527/80**

(43) Date of publication of application:
**05.01.83 Bulletin 83/01**

(45) Publication of the grant of the patent:
**18.06.86 Bulletin 86/25**

(84) Designated Contracting States:
**BE**

(56) References cited:
**EP-A-0 011 228**
**DK-B- 134 845**
**SE-B- 417 674**
**US-A-3 953 578**

(73) Proprietor: **RODSGAARD, Jes Mathias Nordlien**
**Brodersens Allé 1**
**DK-2900 Hellerup (DK)**

(72) Inventor: **ANDERSSON, Finn**
**Gaerdehuset 4, st. th.**
**DK-2670 Greve Strand (DK)**

(74) Representative: **De Brabanter, Maurice et al**
**Bureau VANDER HAEGHEN 63 Avenue de la**
**Toison d'Or**
**B-1060 Bruxelles (BE)**

Courier Press, Leamington Spa, England.

## Description

This invention relates to a process for cleaning flue gases from heating plants, such as oil burners, before their injection to the atmosphere, said flue gases containing as impurities, besides solid particles such as fly ash, nitrogen oxides and sulfur oxides, said process comprising the steps of:

a) removing solid particles from the flue gas;

b) passing said flue gas through a first shower of aqueous liquid; and

c) passing said flue gas through a second shower of aqueous liquid, this liquid being emitted in a direction opposite the flow direction of the flue gas.

DK—A—134 845 discloses a method for cleaning air which comprises two washing steps with a liquid for the main purpose of removing odoriferous components from the air.

US—A—3 953 578 discloses a process for the purification of industrial flue gases, combustion products and gaseous effluents before their rejection to the atmosphere, said gases and effluents containing as impurities especially sulfur dioxide and also oxides of nitrogen, sulphuric fogs, dust and soot, said method comprising the steps of:

a) extracting the dust from the gaseous fluid to be purified;

b) carrying the gaseous fluid through a water shower in which the gas is humidified to saturation;

c) establishing intimate contact between said gaseous effluent and an aqueous solution of hydrogen peroxide at a temperature of 55°—65°C.

US—A—3 957 951 describes a method for removing sulphur dioxide and other contaminants from a hot waste gas stream, in which said stream is cooled with water to a temperature below about 38°C in several cooling zones and in which the cooled gas is then passed through at least two absorption zones for the removal of the sulphur dioxide and other contaminants, the absorption zones utilizing as an absorbent a recirculated aqueous solution of ammonium sulfite-bisulfite. Before passing in said absorption zones, the hot waste gas is quenched to a temperature approaching its wet bulb temperature and then cooled in two successive cooling zones to cool said gas and condense the moisture contained therein.

It has now been found that the process according to the first paragraph of the present specification can be improved in such a way that the amount of sulphur oxides can be reduced to 0—2 vol.% in the flue gas and that the latter can be discharged or injected to the atmosphere at a temperature which corresponds almost to the room temperature.

This invention relates therefore to a process for cleaning flue gases from heating plants, such as oil burners, before their injection to the atmosphere, said flue gas containing as impurities, besides solid particles such as fly ash, nitrogen oxides and sulphur oxides, said process comprising the steps of

a) removing solid particles from the flue gas;

b) passing said flue gas through a first shower of aqueous liquid; and

c) passing said flue gas through a second shower of aqueous liquid, this liquid being emitted in a direction opposite the flow direction of the flue gas;

said process being characterized in that

— the liquid of the first shower is emitted intermittently; and

— between the steps (b) and (c), the temperature of said flue gas is reduced to between 20 and 30°C by passing said flue gas through a heat exchanger in which the flue gas does not directly contact a heat exchange fluid (= step d).

According to a further feature of the invention, the process comprises the additional steps of

e) passing said flue gas through an alkaline liquid film between said step (d) and said step (c);

f) passing said flue gas through a sulphuric acid neutralizing liquid in a container after said step (c); and

(g) passing said flue gas through an additional sulphur dioxide neutralizing device after said step (f).

According to another feature of the invention, the flue gas together with said first shower of liquid are carried in a substantially vertical direction downwards through said heat exchanger until said flue gas is contacted with said film of alkaline liquid and said second shower of liquid.

As a result of the process according to this invention, the discharged flue gas is cleaned to such an extent that it is comparable with the atmospheric air as to the content of combustion gases. The content of sulphur dioxide and sulphuric acid is almost completely removed, i.e. only from 0 to 2 vol.% thereof remain. The result of the cleaning is that the expenses involved in building large chimneys can be substantially reduced.

At the same time the heat of the flue gas can be completely utilized as low as to 20°—30°C for heating purposes since a temperature of at least about 150°C to 160°C in the flue gas is no longer required during the passage of said flue gas through a chimney. This high temperature was necessary in connection with the previous plants in order to ensure that the content of sulphuric acid of the flue gas did not turn aggressive within the chimney. This effect is due to a cooperation of the various liquids and the great reduction of the temperature which the flue gas is subjected to. A reduction of the temperature of the partly cleaned flue gas after the first treatment with a shower of gaseous liquid involves an intensely accelerating effect concerning the conversions of $SO_2$—$SO_3$ into $H_2SO_3$ and $H_2SO_4$. The film with alkaline liquid ensures a neutralization of the previously formed $H_2SO_4$ and an oxidation of present nitrogen oxides. The later shower of aqueous liquid ensures a conversion of the remaining amounts of $SO_2$ and $SO_3$ into $H_2SO_3$ and $H_2SO_4$ which are removed during the passage through the sulphuric acid neutralizing liquid in a container before the discharging into the atmospheric air. As an additional security measure, the flue gas cleaned may option-

ally pass through an additional neutralizing device. The low temperature of the cooled flue gas ensures an essential increase of the capacity of the sulphur dioxide of being absorbed in the amount in question of aqueous liquid. By a usual liquefaction of sulphur dioxide at 0°C with water, the dissolving or absorbing is carried out with the following ratios, viz. 1 part of water to 80 parts of $SO_2$, and each time an increase of temperature of 20°C takes place, the number of parts of $SO_2$ is halved. The present 20°—30°C of the flue gas thus implies that considerably higher amounts of $SO_2$ can be absorbed by the aqueous liquid than in the previously known plants, whereby the consumption of aqueous liquid is relatively low compared to usual scrubbers operating at temperatures of about 70°C to 80°C.

The heat exchanger permits heating of for instance water for district heating or of boiler water, as well as a preheating of air for combustion. The preheating of the air for combustion improves the combustion, said combustion being improved by 1.4% per 10° increase of the temperature of the air for the combustion. The loss of heat from the plant is thereby very low compared to the loss occurring in connection with plants with chimneys. The lower amount of necessary liquid renders it possible to make the plant necessary for carrying out the process very small and compact. Furthermore, the higher efficiency per $m^3$ of flue gas and the efficient utilization of the heat reduce the working expenses.

Since, according to the invention, the flue gas together with the first shower of liquid may be carried in a substantially vertical direction downwards through the heat exchanger until said flue gas is contacted with the film of alkaline liquid and the second shower of liquid, it is possible to utilize the gravity efficiently and to obtain a particularly good heat transmission to the heat exchanger.

Furthermore according to the invention, the liquid of the first and the second shower of aqueous liquid may be a mixture of water and hydrogen peroxide, whereby a particularly efficient oxidation of the sulphur dioxide into the sulphur trioxde is ensured.

The process according to this invention may be carried out in a cleaning plant, which comprises an apparatus, in which it is ensured that solid particles such as fly ash are removed from the flue gas, and an apparatus for the reduction of nitrogen oxides and the removal of sulphur dioxide from the flue gas, the latter apparatus optionally being coupled to a neutralizing device. In this cleaning plant, the apparatus for the reduction of nitrogen oxides and the removal of sulphur dioxide, when seen in the flow direction, comprises a first flue scrubber subjecting the passing flue gas to a first shower of liquid, a two-step heat exchanger lowering the temperature of the flue gas to 20°—30°C and comprising both a high temperature heat exchanger and a low temperature heat exchanger, whereby said high temperature heat exchanger is adapted to transfer heat from the flue gas to water such as boiler water or district heating water, and whereby said low temperature heat exchanger is adapted to transfer heat from the flue gas to air supplied to the combustion, that after the two-step heat exchanger means are located for spreading a film of supplied alkaline liquid such as milk of lime or chloride of lime across the apparatus on the place in question, and that a second flue scrubber is provided after these means, said second flue scrubber spraying a second shower of liquid on the passing flue gas, the apparatus for the reduction of nitrogen oxides and removal of sulphur dioxide at the discharge end comprising a container provided with outlets and catching the liquid from the flue scrubbers and the alkaline film spraying means, and in which the flue gas is forced to pass the liquid present in the container before the discharging.

The cleaning plant operates particularly efficiently and when employing appropriate sensors and regulating means, a very reliable control of this plant is rendered possible. In this connection it is noted that the flue gas being treated as mentioned initially is cleaned of solid particles such as fly ash. This cleaning may be performed in many various manners, e.g. by means of a particle-separating apparatus in the form of a multicyclone or filters. In case of oil burning the particle-separating apparatus may be aided by an emulsion plant located before the oil burner. In this emulsion plant, the water is in a manner known per se emulsified in the oil in such a manner that the surface tension of the oil is changed, and a usual drop of oil is changed into about 10 to 20 small drops of oil within the burner. In this manner a better division into fine particles of the oil during the combustion is obtained, which implies that all carbon particles disappear from the flue gas and an optimum combustion is obtained. The high temperature heat exchanger may be adapted to cause a reduction of the temperature of the flue gas to about 70°—80°C, and the low temperature heat exchanger may be adapted to cause an additional reduction of the temperature of the flue gas to about 20°—30°C, whereby a particularly efficient utilization of the heat is obtained. Finally, since the first flue scrubber, the two-step heat exchanger, the alkaline film spreading means, and the second flue scrubber may be located successively and substantially vertically on top of each other with the first flue scrubber at the top, the plant is particularly compact.

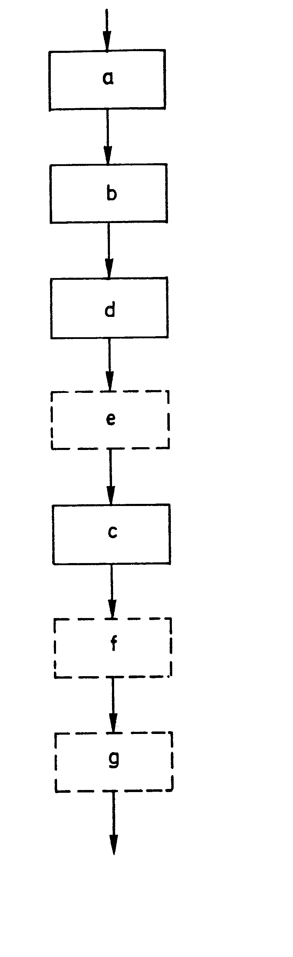

The process according to this invention is illustrated by the attached single figure which is a flow sheet of the various steps of the process. The optional steps are shown by blocks in dotted lines on said figure.

The attached drawing shows that the flue gas to be cleaned, which is a flue gas from a heating plant, such as an oil burner and which contains as impurities solid particles such as fly ash, and noxious nitrogen oxides and sulphur oxides, is first subjected to step (a) in which solid particles are removed therefrom.

The flue gas passes then through a first shower (b) of an aqueous liquid, which may be a mixture of water and hydrogen peroxide, the liquid of first said shower being emitted intermittently in the same direction as the flue gas.

Before passing through a second shower (e) of an aqueous liquid, which may also be a mixture of water and hydrogen peroxide and which is emitted in a direction (upward direction) opposite the flow direction of the flue gas indicated by the arrows on the block diagram, the temperature of the flue gas is reduced to between 20° and 30°C by passing it through a heat exchanger (d), in which the flue gas does not directly contact the heat exchange fluid. The heat exchanger is preferably a two-step heat exchanger comprising a high temperature heat exchanger and a low temperature heat exchanger. The high temperature heat exchanger may comprise a pipe system in which water is circulated. Upon passage through the high temperature heat exchanger, the initial temperature of the flue gas which may be of 200°—260°C is decreased to a temperature of 70°—80°C, whereby the temperature of the water within the high temperature heat exchanger raises to 95°—105°C.

After the high temperature heat exchanger, the liquid of the first shower and of the flue gas are contacted with the low temperature heat exchanger preferably in the form of a large number of transverse tubes made of a material which will stand up to high temperatures and sulphuric acid. Atmospheric air or a liquid passes these tubes at 10°—25°C, and during the passage through the heat exchanger the temperature of said medium is risen to 45°—55°C, whereby it is suited for use as air for the combustion. Having passed the low temperature heat exchanger, the temperature of the flue gas is 20°—30°C.

During the passage of the flue gas through the first shower and the high temperature heat exchanger, part of the sulphur dioxide contained in the flue gas is contacted with the water from the flue scrubber and converted to $H_2SO_3$ whereas other parts of the sulphur dioxide are oxidized by the hydrogen peroxide to $SO_3$ and subsequently converted to $H_2SO_4$ during the contact with the water. The water of the first shower simultaneously ensures a continuous rinsing of the two heat exchangers. During the passage of the flue gas through the low temperature heat exchanger, the temperature of said flue gas is, as mentioned, lowered to about 20°—30°C. At this temperature the capacity of the water of absorbing sulphur dioxide is intensely increased compared to the capacity thereof at higher temperatures. At 20°C, 40 volumes of $SO_2$ are dissolved in one volume of water. At the present temperatures, a high degree of dissolving is therefore ensured although the water consumption is very small.

After the step (d) of passing through the heat exchanger, but before the step (c) of passing through the second shower of aqueous liquid, the flue gas is optionally contacted, in step (e), with an alkaline liquid film such as a film of lime-milk, so that a considerable part of the sulphuric acid still present in the flue gas is neutralized, as well as the present part of nitrogen is catched and oxidized.

After the step (c) of submitting the flue gas to the second shower of aqueous liquid, said flue gas may be caused to pass through a sulphuric acid neutralizing liquid (step f), which may be a limy liquid which neutralizes the remaining residues of $H_2SO_4$.

After step (f), the flue gas only contains from 0 to 2 vol.% of sulphur dioxide. This unusually low amount of $SO_2$ can finally be reduced by passing (step g) said flue gas through an additional $SO_2$ neutralizing device, before discharging the cooled and purified flue gas into the atmosphere.

## Claims

1. A process for cleaning flue gases from heating plants, such as oil burners, before their injection to the atmosphere, said flue gas containing as impurities, besides solid particles such as fly ash, nitrogen oxides and sulphur oxides, said process comprising the steps of

(a) removing solid particles from the flue gas;

(b) passing said flue gas through a first shower of aqueous liquid; and

(c) passing said flue gas through a second shower of aqueous liquid, this liquid being emitted in a direction opposite the flow direction of the flue gas;

characterised in that the liquid of the first shower is emitted intermittently; and

between the steps (b) and (c) above, the temperature of said flue gas is reduced to between 20° and 30°C by passing said flue gas through a heat exchanger in which the flue gas does not directly contact a heat exchange fluid (= step d).

2. A process according to Claim 1, characterised in that it includes the additional steps of

(e) passing said flue gas through an alkaline liquid film between said step (d) and said step (c);

(f) passing said flue gas through a sulphuric acid neutralising liquid in a container after said step (c); and

(g) passing said flue gas through an additional sulphur dioxide neutralizing device after step (f).

3. A process according to Claim 2, characterised in that said flue gas together with said first shower of liquid are carried in a substantially vertical direction downwards through said heat exchanger until said flue gas is contacted with said film of alkaline liquid and said second shower of liquid.

4. A process according to any one of the preceding claims, characterised in that the liquid of said first shower and the liquid of said second shower are a mixture of water and hydrogen peroxide.

## Patentansprüche

1. Verfahren zum Reinigen von Abgasen aus Heizanlagen, wie z.B. Ölbrenner, bevor die Abgasen an die atmosphärischen Luft abgegeben werden, wobei das Abgas als Unreinigkeiten Feststoffteile, wie z.B. Flugasche, Stickstoffoxide und Schwefeldioxide, enthält, welches Verfahren die Stufen

(a) Entfernen von Feststoffteilen aus dem Abgas,

(b) Leiten des Abgases durch einen ersten Flüssigkeitsregen, und

(c) Leiten des Abgases durch einen zweiten Flüssigkeitsregen, wobei die Flüssigkeit in einer Richtung versprüht wird, die der Strömungsrichtung des Abgases entgegengesetzt ist, umfaßt,

dadurch gekennzeichnet, daß die Flüssigkeit des ersten Flüssigkeitsregens intermittent versprüht wird, und daß die Temperatur des Abgases zwischen den obigen Stufen (b) und (c) auf zwischen 20 und 30°C durch Leiten des Abgases durch einen Wärmeaustauscher, in der das Abgas mit einer Wärmeaustauschflüssigkeit nicht in direktem Kontakt kommt, herabgesetzt wird (= Stufe d).

2. Verfahren nach Anspruch 1, dadurch gekennzeichnet, daß es die weiteren Stufen

(e) Leiten des Abgases durch einen alkalischen Flüssigkeitsfilm zwischen der obigen Stufe (d) und der obigen Stufe (c),

(f) Leiten des Abgases durch eine Schwefelsäure neutralisierende Flüssigkeit in einem Behälter nach der obigen Stufe (c), und

(g) Leiten des Abgases durch eine weitere Schwefelsäure neutralisierende Vorrichtung nach der Stufe (f), umfaßt.

3. Verfahren nach Anspruch 2, dadurch gekennzeichnet, daß das Abgas zusammen mit dem ersten Flüssigkeitsregen in hauptsächlich senkrechter Richtung nach unten durch den Wärmeaustauscher geführt wird, bis das Abgas mit dem alkalischen Flüssigkeitsfilm und dem zweiten Flüssigkeitsregen in Kontakt kommt.

4. Verfahren nach jedem der vorhergehenden Ansprüche, dadurch gekennzeichnet, daß die Flüssigkeit des ersten Flüssigkeitsregens und die Flüssigkeit des zweiten Flüssigkeitsregens eine Mischung aus Wasser und Wasserstoffperoxid sind.

**Revendications**

1. Procédé d'épuration des gaz de fumées émis par les installations de chauffage telles que des brûleurs à huile, avant leur injection dans l'atmosphère, lesdits gas de fumées contenant comme impuretés, en outre des particules solides telles que les cendres volantes, des oxydes d'azote et des oxydes de soufre, ce procédé comprenant les étapes consistant à:

(a) enlever les particules solides des gaz de fumées;

(b) faire passer les gaz de fumées à travers une première pluie d'un liquide aqueux; et

(c) faire passer les gaz de fumées à travers une seconde pluie d'un liquide aqueux, ce liquide étant émis dans un sens opposé au sens d'écoulement des gaz de fumées,

caractérisé en ce que le liquide de la première pluie est émis de façon intermittente et entre les étapes (b) et (c) indiquées ci-dessus, la température des gaz de fumées est réduite à une valeur comprise entre 20°C et 30°C en faisant passer les gaz de fumées par un échangeur de chaleur dans lequel les gaz de fumées ne viennent pas en contact direct avec un fluide d'échange de chaleur (= étape (d)).

2. Procédé suivant la revendication 1, caractérisé en ce qu'il comprend les étapes supplémentaires consistant à

(e) faire passer les gaz de fumées à travers une pellicule de liquide alcalin entre l'étape (d) et l'étape (c);

(f) faire passer les gaz de fumées à travers un liquide neutralisant l'acide sulfurique, dans un récipient, après l'étape (c);

(g) faire passer les gaz de fumées à travers un dispositif supplémentaire neutralisant le bioxyde de soufre, après l'étape (f).

3. Procédé suivant la revendication 2, caractérisé en ce que les gaz de fumées, ensemble avec la première pluie de liquide, sont transportés en une direction sensiblement verticale vers le bas à travers l'échangeur de chaleur jusqu'à ce que le gaz de fumées soit en contact avec ladite pellicule de liquide alcalin et la seconde pluie de liquide.

4. Procédé suivant l'une quelconque des revendications précédentes, caractérisé en ce que le liquide de la première pluie et le liquide de la seconde pluie sont un mélange d'eau et de peroxyde d'hydrogène.

```
┌─────────┐
│    a    │
└─────────┘
     │
     ▼
┌─────────┐
│    b    │
└─────────┘
     │
     ▼
┌─────────┐
│    d    │
└─────────┘
     │
     ▼
┌ ─ ─ ─ ─ ┐
│    e    │
└ ─ ─ ─ ─ ┘
     │
     ▼
┌─────────┐
│    c    │
└─────────┘
     │
     ▼
┌ ─ ─ ─ ─ ┐
│    f    │
└ ─ ─ ─ ─ ┘
     │
     ▼
┌ ─ ─ ─ ─ ┐
│    g    │
└ ─ ─ ─ ─ ┘
     │
     ▼
```